# EUROPÄISCHE PATENTSCHRIFT

(11) **EP 1 745 225 B1**
(45) Veröffentlichungstag und Bekanntmachung des Hinweises auf die Patenterteilung: **02.04.2008**
(21) Anmeldenummer: 05745650.1
(22) Anmeldetag: 04.05.2005
(51) Int. Cl.: F16H 47/02, F16H 57/04

(54) **ANTRIEB FÜR MOBILFAHRZEUGE**
DRIVE UNIT FOR MOBILE VEHICLES
ENTRAINEMENT POUR VEHICULES MOBILES

(30) Priorität: 10.05.2004 DE 102004023631
(43) Veröffentlichungstag der Anmeldung: 24.01.2007
(73) Patentinhaber: ZF FRIEDRICHSHAFEN AG, 88038 Friedrichshafen (DE)
(72) Erfinder: LEGNER, Jürgen, 88048 Friedrichshafen (DE); REBHOLZ, Wolfgang, 88045 Friedrichshafen (DE)
(86) Internationale Anmeldenummer: PCT/EP2005/004834
(87) Internationale Veröffentlichungsnummer: WO 2005/111466

(56) Entgegenhaltungen:
- EP-A- 0 750 136
- EP-A- 1 148 275
- DE-A1- 2 101 515
- FR-A- 1 321 351
- FR-A- 1 378 683

## Beschreibung

Die Erfindung betrifft einen Antrieb für ein Mobilfahrzeug, insbesondere eine Arbeitsmaschine, nach der im Oberbegriff von Anspruch 1 näher definierten Art, wie aus der EP 750 136 A bekannt.

Gattungsgemäße Antriebe für Mobilfahrzeuge werden beispielsweise zum Antrieb eines Radladers, Radbaggers oder Graders verwendet, wobei das Drehmoment von einem ersten Hydraulikmotor und einem zweiten Hydraulikmotor in einem Summierungsgetriebe aufsummiert wird, um die Antriebsräder des Fahrzeugs anzutreiben.

Die EP 0 483 543 B1 offenbart einen hydrostatischen Antrieb für ein Erdbewegungsfahrzeug, bei welchem ein erster Axialkolben-Hydromotor und ein zweiter Axialkolben-Hydromotor an ein Summierungsgetriebegehäuse angeflanscht ist, wobei der Axialkolben-Hydromotor flüssigkeitsdicht gegenüber dem Getriebegehäuse abgedichtet ist, wodurch das Getriebe und die Hydraulik separate Ölversorgungssysteme benötigen.

Der vorliegenden Erfindung liegt die Aufgabe zugrunde, einen Antrieb für ein Mobilfahrzeug mit zwei Hydromotoren und einem Summierungsgetriebe zu schaffen, welcher sich durch eine geringe Anzahl von Bauteilen und einem einfachen Hydrauliksystem auszeichnet.

Die Aufgabe wird mit einem, auch die kennzeichnenden Merkmale des Hauptanspruchs aufweisenden, gattungsgemäßen Antrieb für ein Mobilfahrzeug gelöst.

Erfindungsgemäß weist der Antrieb zwei Radialkolben-Hydromotore auf, welche beispielsweise in der WO 99/17021 offenbart sind, welche hiermit vollständig mitumfaßt sein soll. Die Hydromotore sind so mit einem Summierungsgetriebe verbunden, dass das Drehmoment der beiden Hydromotore aufsummierbar ist und an der Abtriebswelle des Summierungsgetriebes zur Verfügung steht. Die beiden Hydromotore und das Summierungsgetriebe sowie eventuell vorhandene Untersetzungsgetriebe zwischen den Summierungsgetrieben und den Hydromotoren sind in einem einzigen Getriebegehäuse angeordnet, wobei die Hydromotore so ausgeführt sind, dass deren Leckage direkt in das Getriebegehäuse gelangen kann. Vorzugsweise ist das Getriebegehäuse das Druckmittelreservoir zur Versorgung der Pumpe und der Hydromotore mit Druckmittel und zur Versorgung der Getriebebauteile mit Schmiermittel.

In einer weiteren Ausgestaltungsform der Erfindung besteht das Getriebegehäuse aus zwei Hauptteilen, wobei die drehbar gelagerten Zylinder in jeweils einem Getriebehauptteil gelagert sind. Vorzugsweise befindet sich am Getriebegehäuse eine Filtereinrichtung, mittels welcher Druckmittel aus dem Getriebegehäuse entnommen und gefiltert und einer Pumpe zugeführt wird.

In einer weiteren Ausgestaltungsform ist ein elektronisch-hydraulisches Steuermodul am Getriebegehäuse angebracht, wobei vorzugsweise das Getriebegehäuse in diesem Bereich eine Öffnung aufweist, durch welche ein Teil der hydraulischen Steuereinheit in das Getriebegehäuse ragt. Die elektronische Steuereinheit ist vorzugsweise auf der hydraulischen Steuereinheit angeordnet und mit dieser verbunden. Es besteht die Möglichkeit, von der hydraulischen Steuereinheit Leitungen zu den Verbrauchern innerhalb des Getriebegehäuses anzuordnen oder die Leitungen innerhalb der Wandung des Getriebegehäuses auszubilden. Vorzugsweise sind in dieser hydraulischen Steuereinheit, welche mit der elektronischen Steuereinheit verbunden ist, die Vorsteuerventile angeordnet, welche hydraulische Ventile ansteuern.

In einer weiteren Ausgestaltungsform der Erfindung ist die Kurbelwelle des hydraulischen Motors einerseits in dem einen Teil des Getriebegehäuses und andererseits in dem anderen Teil des Getriebegehäuses gelagert. Konzentrisch zur Kurbelwelle befindet sich ein Druckmittei-Verteilungsdeckel, in welchem die hydraulischen Ventile, welche von den Vorsteuerventilen angesteuert sind, angeordnet sind, und in welchem die Verteilung des Druckmittels auf die Kolben des Hydromotors durchgeführt wird.

In einer weiteren Ausgestaltungsform der Erfindung befindet sich innerhalb des Getriebegehäuses auf der Abtriebswelle eine Parkbremse.

In einer weiteren Ausgestaltungsform der Erfindung sind die beiden Hydromotore so angeordnet, dass sie oberhalb der Oberfläche des Druckmittels im Getriebegehäuse angeordnet sind, um Panschverluste zu reduzieren.

In einer weiteren Ausgestaltungsform der Erfindung sind die Hydromotore so angeordnet, dass die Kolben des einen Motors in Zwischenräume der Kolben des anderen Motors eingreifen. Vorzugsweise ist die Abtriebswelle so ausgestaltet, dass diese durchgängig durch das Getriebegehäuse ausgebildet ist, wodurch auf jeder Seite je ein konzentrisch angeordneter Abtrieb ermöglicht wird.

Indem die Hydromotore und das Summierungsgetriebe sowie Untersetzungsgetriebe und Schalteinrichtungen sowie das Druckmittelreservoir innerhalb des Getriebegehäuses angeordnet sind, wird ein kompakter Antrieb für Mobilfahrzeuge geschaffen, welcher sich durch einen einfachen Hydraulikkreislauf auszeichnet.

Die Druckmittelzuführungen zur Schluckvolumenverstellung sind auf einem möglichst kleinen Durchmesser der Motorwelle angeordnet.

Indem die Motore nicht auf der Abtriebswelle angeordnet sind, ist es möglich, die Druckmittelzuführung zur Verstellung des Hubvolumens auf einer Seite der Kurbelwelle in der Kurbelwelle anzuordnen und mit dem Hochdruck zu verbinden. Die Abdichtung kann somit auf einem geringen Durchmesser angeordnet sein, wodurch auch bei höheren Drücken höhere Drehzahlen möglich sind.

Weitere Merkmale sind der Figuren-Beschreibung zu entnehmen. Es zeigen:
- Fig. 1: einen Schnitt durch den erfindungsgemäßen Antrieb;
- Fig. 2: einen Schnitt durch den erfindungsgemäßen Antrieb;
- Fig. 3: ein Getriebeschema mit zwei Hydromotoren und einem Summierungsgetriebe;
- Fig. 4: ein Getriebeschema mit zwei Hydromotoren, einem Summierungsgetriebe und einem schaltbaren Untersetzungsgetriebe und

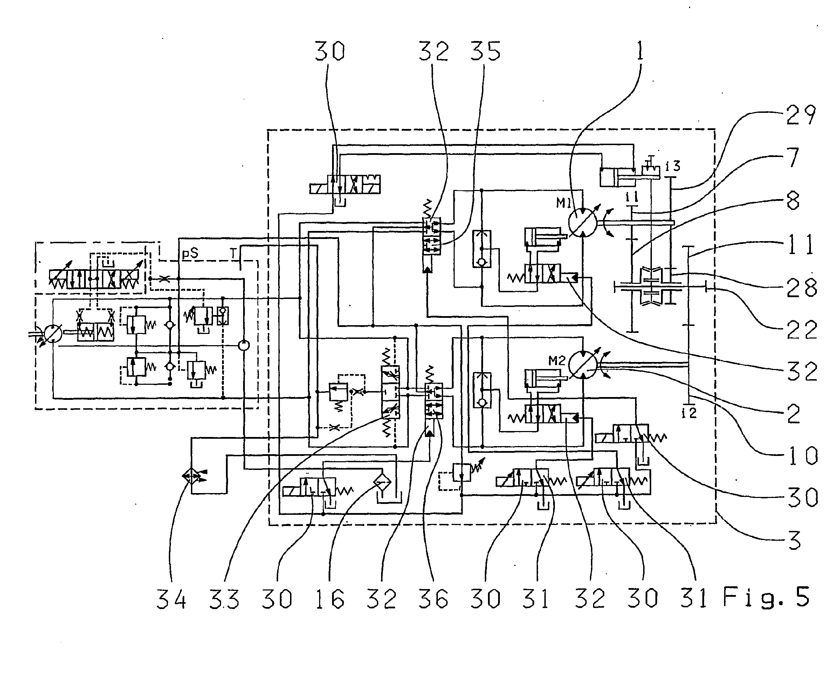

- Fig. 5: ein Getriebehydraulikschema mit zwei Hydromotoren, einem Summierungsgetriebe und einem schaltbaren Untersetzungsgetriebe.

### Fig. 1:

Ein erster Motor 1 und ein zweiter Motor 2 sind innerhalb eines Getriebegehäuses 3 angeordnet. Die Hydromotore sind wie die Motore in der WO 99117021 ausgeführt, wobei die Hubraumverstellung auch rein hydraulisch ausgeführt sein kann, indem der Verstellkolben in der Kurbelwelle Kolben aufweist, welche vom Hochdruck beaufschlagbar sind. Die Kolben 4 und Zylinder 5 des Motors 1 greifen in Zwischenräume der Kolben 4 und Zylinder 5 des Motors 2 ein, wodurch der Antrieb kompakt ausgeführt sein kann. Der Motor 1 treibt mit seiner Abtriebswelle 6 ein Stirnrad 7 an, welches mit einem Stirnrad 8 in Wirkverbindung steht, welches mit einer nicht gezeigten Abtriebswelle drehfest verbunden ist. Die Abtriebswelle 9 des Motors 2 treibt ein Stirnrad 10 an, welches mit einem Stirnrad 11 in Wirkverbindung steht, welches mit der nicht gezeigten Abtriebswelle drehfest verbunden ist. Das Getriebegehäuse 3 weist einen Durchbruch 12 auf, durch welchen eine hydraulische Steuereinheit 13 in das Getriebegehäuse 3 ragt, welche über Dichtmittel 14 flüssigkeitsdicht mit dem Getriebegehäuse 3 verbunden ist. Auf der hydraulischen Steuereinheit 13 ist eine elektronische Steuereinheit 15 angeordnet, welche die Vorsteuerventile, welche in der hydraulischen Steuereinheit 13 angeordnet sind, ansteuert. Mit dem Getriebegehäuse 3 ist eine Filtereinheit 16 verbunden, durch welche das Druckmittel, welches sich innerhalb des Getriebegehäuses 3 befindet, entnommen, gefiltert und einer nicht gezeigten Pumpe zugeführt werden kann.

### Fig. 2:

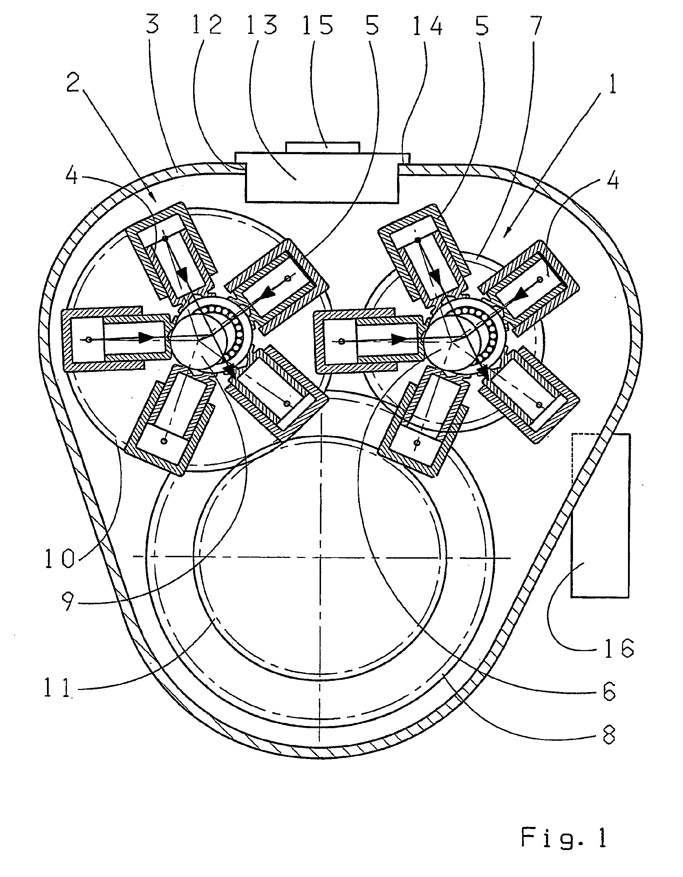

Der Zylinder 5 des Motors 1 ist über eine erste Lagerstelle 17 und eine zweite Lagerstelle 18 im Getriebegehäuse 3 gelagert. Die Lagerstelle 17 ist in einer ersten Getriebegehäusehälfte 19 und die Lagerstelle 18 in einer zweiten Getriebegehäusehälfte 20 gelagert. Die Trennlinie 21 der Getriebegehäusehälfte 19 und Getriebegehäusehälfte 20 ist zwischen der Lagerstelle 17 und der Lagerstelle 18 angeordnet. Mit der Abtriebswelle 6 des Motors 1, welche als Kurbelwelle ausgebildet ist, ist ein Stirnrad 7 drehfest verbunden. Das Stimrad 7 kämmt mit einem Stirnrad 8, welches drehfest mit der Abtriebswelle 22 verbunden ist. Der Motor 2 der Fig. 1 treibt über das in Fig. 1 gezeigte Stimrad 2 das Stirnrad 11 an, welches ebenfalls drehfest mit der Abtriebswelle 22 verbunden ist. Auf der Abtriebswelle 22 befindet sich eine Parkbremse 23, welche innerhalb des Getriebegehäuses 3 angeordnet ist. Die Abtriebswelle 22 durchdringt das Getriebegehäuse 3 vollständig, so dass auf jeder Seite des Getriebegehäuses ein Abtriebsflansch 24 angeordnet sein kann. Auf der Getriebegehäusehälfte 19 ist ein Druckmittel-Verteilungsdeckel 25 angeordnet, in welchem die hydraulischen Ventile, welche von den Vorsteuerventilen angesteuert werden, angeordnet sind und welcher Zuführungsanschlüsse für die Hoch- und Niederdruckleitungen aufweist, und den Volumenstrom einer hydraulischen Pumpe in Zuführungsleitungen 26, welche in der Getriebegehäusehälfte 19 angeordnet sind, zu den Zylindern 17 leitet. Die Zuführleitungen 26, und wahlweise auch die Lagerstellen 17, können auch in einem Deckel, der in die Getriebegehäusehälfte 19 eingesetzt ist, untergebracht sein. Dadurch ist es möglich, den Deckel aus Hydraulikguss und die restliche Getriebegehäusehälfte 19 aus Sandguss herzustellen. Somit weist das Getriebegehäuse ausschließlich hydraulische Versorgungsleitungen und Steuerleitungen zur elektronischen Steuereinheit auf, wodurch die Installation im Fahrzeug erheblich erleichtert wird. Die Verbindungsleitungen der Vorsteuerventile zu den hydraulischen Ventilen sind vorzugsweise innerhalb des Getriebegehäuses 3 angeordnet. Die Druckmittelzuführungen 37 und 38 sind mit Dichtungen 39 im Gehäuseteil 19 bzw. in einem (oder zwei) Deckel an einem möglichst kleinen Durchmesser der Abtriebswelle 6 angeordnet.

### Fig. 3:

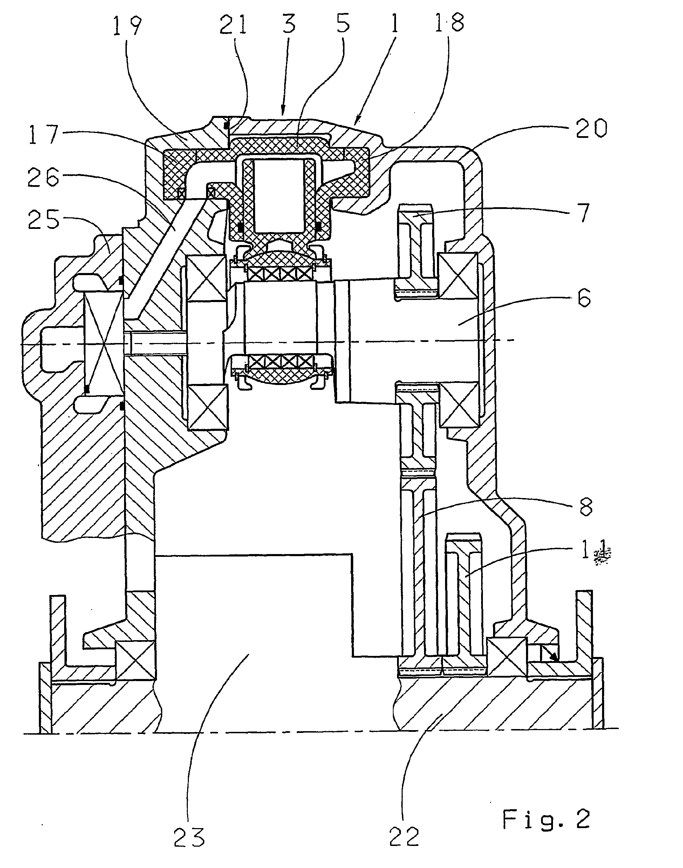

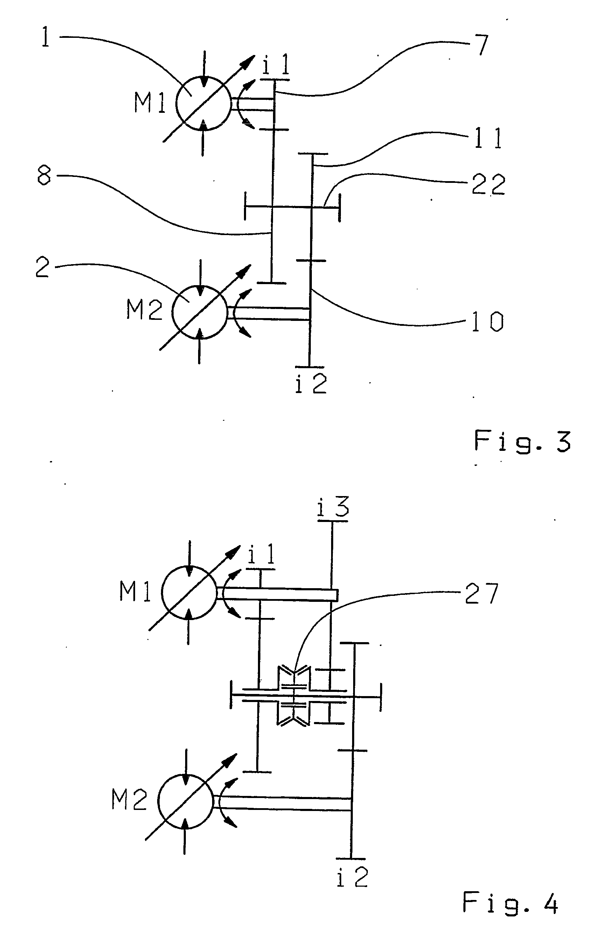

In Fig. 3 ist das Getriebeschema des in Fig. 1 und 2 erläuterten Antriebs dargestellt.

### Fig. 4:

Es besteht die Möglichkeit, den in Fig. 1 und 2 dargestellten Antrieb mit dem Getriebeschema von Fig. 4 auszuführen, wodurch der Antrieb für schwerere Arbeitsfahrzeuge mit hohen Fahrgeschwindigkeiten verwendet werden kann. Durch die zusätzliche Schalteinrichtung 27 wird ein weiterer Untersetzungsbereich geschaffen.

### Fig. 5:

Innerhalb des Getriebegehäuses 3 sind der Motor 1 und der Motor 2 angeordnet, wobei der Motor 1 das Stirnrad 7 und dieses das Stirnrad 8 antreibt, und der Motor 2 das Stirnrad 10 und dieses das Stirnrad 11. Das Stimrad 11 ist drehfest mit der Abtriebswelle 22 und das Stirnrad 8 ist drehfest mit der Schalteinrichtung 27 verbunden, welche entweder das Stirnrad 8 oder das Stirnrad 28 mit der Abtriebswelle 22 verbinden. Der Motor 1 treibt über das Stirnrad 29 das Stirnrad 28 an. Die Vorsteuerventile 30 sind in der hydraulischen Steuereinheit 13 der Fig. 1 angeordnet und mit der elektronischen Steuereinheit 15 verbunden. Die Ventile 31 sind als Proportionalventile ausgeführt. Die Hydraulikventile 32 sind in dem Druckmittel-Verteilungsdeckel 25 angeordnet. Über ein Spülventil 33 wird permanent heißes Druckmittel entnommen und durch einen Kühler 34 gekühlt. Die Filtereinheit 16 kann im oder am Getriebegehäuse 3 angeordnet sein. Um den Antrieb kompakt auszuführen und möglichst wenig Schaltelemente zu verwenden, wird vorzugsweise der Motor, welcher oberhalb seiner maximal zulässigen Drehzahl betrieben werden soll, in seinem Hubvolumen auf das Hubvolumen Null verstellt und anschließend über das Ventil 35 oder 36 vom Hochdruck getrennt. Dadurch ist es möglich, bei maximaler Abtriebsdrehzahl alle Motore in permanenter Wirkverbindung mit der Abtriebswelle 22 zu belassen, wodurch keine zusätzliche mechanische Abschalteinrichtung für den Hydromotor benötigt wird.

### Bezugszeichen

- 1: Motor
- 2: Motor
- 3: Getriebegehäuse
- 4: Kolben
- 5: Zylinder
- 6: Abtriebswelle
- 7: Stirnrad
- 8: Stirnrad
- 9: Abtriebswelle
- 10: Stirnrad
- 11: Stirnrad
- 12: Durchbruch
- 13: hydraulische Steuereinheit
- 14: Dichtmittel
- 15: elektronische Steuereinheit
- 16: Filtereinheit
- 17: Lagerstelle
- 18: Lagerstelle
- 19: Getriebegehäusehälfte
- 20: Getriebegehäusehälfte
- 21: Trennlinie
- 22: Abtriebswelle
- 23: Parkbremse
- 24: Abtriebsflansch
- 25: Druckmittel-Verteilungsdeckel
- 26: Zuführungsleitung
- 27: Schalteinrichtung
- 28: Stirnrad
- 29: Stirnrad
- 30: Vorsteuerventile
- 31: Proportionalventile
- 32: Hydraulikventile
- 33: Spülventil
- 34: Kühler
- 35: Ventil
- 36: Ventil
- 37: Druckmitttetzuführung
- 38: Druckmittelzuführung
- 39: Dichtungen

## Patentansprüche

1. Antrieb für ein Mobilfahrzeug mit mindestens zwei hydraulischen Motoren (1, 2), welche so mit einem Summierungsgetriebe in Verbindung stehen, dass das Drehmoment der Hydromotore summierbar ist und eine Abtriebswelle (22) antreibt, mit einem Getriebegehäuse (3), in welchem das Summierungsgetriebe angeordnet ist, wobei die Hydromotore (1, 2) innerhalb eines Getriebegehäuses (3) angeordnet sind, **dadurch gekennzeichnet, dass** die Motore als Radialkolbenmotore mit einer Kurbelwelle (6, 9) ausgeführt sind und eine hydraulische Hubraumverstellung aufweisen.

2. Antrieb für ein Mobilfahrzeug nach Anspruch 1, **dadurch gekennzeichnet, dass** die Leckage der Hydromotore (1, 2) sich im Getriebegehäuse (3) mit dem Druckmittel im Getriebegehäuse (3) vermengt.

3. Antrieb für ein Mobilfahrzeug nach Anspruch 1, **dadurch gekennzeichnet, dass** die Motore (1, 2) als innen abgestützte Radialkolbenmotore ausgebildet sind.

4. Antrieb für ein Mobilfahrzeug nach Anspruch 1, **dadurch gekennzeichnet, dass** das Getriebegehäuse (3) aus zwei Gehäusehälften (19, 20) besteht, wobei Zylinder (5) des Hydromotors (1, 2) in den Gehäusehälften (19, 20) gelagert sind.

5. Antrieb für ein Mobilfahrzeug nach Anspruch 1, **dadurch gekennzeichnet, dass** eine hydraulische Steuereinheit (13) in einem Durchbruch (12) des Getriebegehäuses (3) angeordnet ist.

6. Antrieb für ein Mobilfahrzeug nach Anspruch 5, **dadurch gekennzeichnet, dass** eine elektronische Steuereinheit (15) mit der hydraulischen Steuereinheit (13) verbunden ist.

7. Antrieb für ein Mobilfahrzeug nach Anspruch 5, **dadurch gekennzeichnet, dass** in der hydraulischen Steuereinheit Vorsteuerventile angeordnet sind.

8. Antrieb für ein Mobilfahrzeug nach Anspruch 1, **dadurch** gekenn-zeichnet, dass eine Parkbremse (23) innerhalb des Getriebegehäuses (3) angeordnet ist.

9. Antrieb für ein Mobilfahrzeug nach Anspruch 1, **dadurch gekennzeichnet, dass** das Getriebegehäuse (3) Anschlüsse für hydraulische Versorgungsleitungen und elektrische Steuerleitungen aufweist.

10. Antrieb für ein Mobilfahrzeug nach Anspruch 1, **dadurch gekennzeichnet, dass** ein Deckel die Druckölzuführleitungen (26) und wahlweise auch die Lagerstellen (17) des Motors (1, 2) beinhaltet und in der Gehäusehälfte (19) eingesetzt ist.

## Claims

1. Drive for a mobile vehicle comprising at least two hydraulic motors (1, 2), which are connected in such a way to a summarizing gear set that the torque of the hydraulic motors may be summarized and drives an output shaft (22), comprising a gearbox (3), in which the summarizing gear set is disposed, wherein the hydraulic motors (1, 2) are disposed inside a gearbox (3), **characterized in that** the motors take the form of radial piston motors having a crankshaft (6, 9) and comprise a hydraulic displacement-varying device.

2. Drive for a mobile vehicle according to claim 1, **characterized in that** the leakage of the hydraulic motors (1, 2) mixes in the gearbox (3) with the pressure medium in the gearbox (3).

3. Drive for a mobile vehicle according to claim 1, **characterized in that** the motors (1, 2) take the form of internally supported radial piston motors.

4. Drive for a mobile vehicle according to claim 1, **characterized in that** the gearbox (3) comprises two gearbox halves (19, 20), wherein cylinders (5) of the hydraulic motor (1, 2) are mounted in the housing halves (19, 20).

5. Drive for a mobile vehicle according to claim 1, **characterized in that** a hydraulic control unit (13) is disposed in an opening (12) of the gearbox (3).

6. Drive for a mobile vehicle according to claim 5, **characterized in that** an electronic control unit (15) is connected to the hydraulic control unit (13).

7. Drive for a mobile vehicle according to claim 5, **characterized in that** pilot valves are disposed in the hydraulic control unit.

8. Drive for a mobile vehicle according to claim 1, **characterized in that** a parking brake (23) is disposed inside the gearbox (3).

9. Drive for a mobile vehicle according to claim 1, **characterized in that** the gearbox (3) comprises ports for hydraulic supply lines and electric control lines.

10. Drive for a mobile vehicle according to claim 1, **characterized in that** a cap contains the pressure-oil supply lines (26) and optionally also the bearing points (17) of the motor (1, 2) and is inserted in the housing half (19).

## Revendications

1. Entraînement pour un véhicule mobile avec au moins deux moteurs hydrauliques (1, 2) reliés à une transmission additionnelle de façon à ce que les couples des moteurs hydrauliques puissent être additionnés et qui entraîne un arbre de sortie (22), avec un carter de transmission (3), dans lequel se trouve la transmission additionnelle, les moteurs hydrauliques (1, 2) étant disposés à l'intérieur d'un carter de transmission (3), **caractérisé en ce que** les moteurs sont conçus comme des moteurs à pistons radiaux à vilebrequins et **en ce qu'**ils comprennent un réglage hydraulique de la cylindrée.

2. Entraînement pour un véhicule mobile selon la revendication 1, **caractérisé en ce que** les fuites des moteurs hydrauliques (1, 2) se mélangent, dans le carter de transmission (3), avec le fluide sous pression du carter de transmission (3).

3. Entraînement pour un véhicule mobile selon la revendication 1, **caractérisé en ce que** les moteurs hydrauliques (1, 2) sont conçus comme des moteurs à pistons radiaux avec appui interne.

4. Entraînement pour un véhicule mobile selon la revendication 1, **caractérisé en ce que** le carter de transmission (3) est constitué de deux moitiés de carter (19, 20), les cylindres (5) des moteurs hydrauliques (1, 2) étant logés dans les moitiés de carter (19, 20).

5. Entraînement pour un véhicule mobile selon la revendication 1, **caractérisé en ce qu'**une unité de commande hydraulique (13) se trouve dans une ouverture (12) du carter de transmission (3).

6. Entraînement pour un véhicule mobile selon la revendication 5, **caractérisé en ce qu'**une unité de commande électronique (15) est reliée à l'unité de commande hydraulique (13).

7. Entraînement pour un véhicule mobile selon la revendication 5, **caractérisé en ce que** des soupapes pilotes se trouvent dans l'unité de commande hydraulique (13).

8. Entraînement pour un véhicule mobile selon la revendication 1, **caractérisé en ce qu'**un frein de parc (23) se trouve à l'intérieur du carter de transmission (3).

9. Entraînement pour un véhicule mobile selon la revendication 1, **caractérisé en ce que** le carter de transmission (3) comprend des raccords pour des conduites d'alimentation et des conduites de commande électriques.

10. Entraînement pour un véhicule mobile selon la revendication 1, **caractérisé en ce qu'**un couvercle contient les conduites d'alimentation en huile sous pression (26) et, en option, les paliers (17) du moteur (1, 2), et **en ce qu'**il est inséré dans la moitié du carter de transmission (19).
